# EUROPEAN PATENT APPLICATION

(11) **EP 4 709 040 A1**
(43) Date of publication of application: **11.03.2026**
(21) Application number: 24905389.3
(22) Date of filing: 28.04.2024
(51) Int. Cl.: H05B 3/34, H05B 3/14, H05B 1/02, A47J 37/06, C01B 32/21, C01B 32/225, C01B 32/194

(54) **HEATING FILM AND PREPARATION METHOD THEREFOR, AND HEATING TUBE AND HEATING APPLIANCE**

(30) Priority: 22.12.2023 CN 202311793250
(71) Applicant: Guangdong Midea Kitchen Appliances Manufacturing Co., Ltd., Foshan, Guangdong 528311 (CN)
(72) Inventor: ZHANG, Zehui, Foshan, Guangdong 528311 (CN); WANG, Xingzhong, Foshan, Guangdong 528311 (CN); RAO, Jie, Foshan, Guangdong 528311 (CN); SUN, Yanjun, Foshan, Guangdong 528311 (CN); TANG, Xiangwei, Foshan, Guangdong 528311 (CN)
(74) Representative: RGTH
(86) International application number: PCT/CN2024/090442
(87) International publication number: WO 2025/129885

(57) **Abstract**

Provided are a heating film, a method for preparing the heating film, a heating tube, and a heating appliance. The heating film has a critical temperature. When a temperature of the heating film is lower than the critical temperature, a resistance of the heating film decreases with an increase in the temperature of the heating film. When the temperature of the heating film is higher than the critical temperature, the resistance of the heating film increases with the increase in the temperature of the heating film.

## Description

### CROSS-REFERENCE TO RELATED APPLICATION

This application claims priority to and benefits of Chinese patent application No. 2023117932500, filed on December 22, 2023, the entire content of which is incorporated herein by reference.

### FIELD

The present disclosure relates to the technical field of electric appliance, and particularly, to a heating film, a method for preparing the heating film, a heating tube, and a heating appliance.

### BACKGROUND

Conventional electric ovens heat the food mainly through heating the air in a chamber by heating tubes, and heat a surface of the food directly through heat radiation. At present, main heating components used in heating appliances existing on the market, such as electric ovens, microwave ovens, and combi steam ovens, comprise heating tubes such as metallic heating tubes (having a highest heating temperature range between 550°C and 750°C),quartz heating tubes (a heating wire of which has a heating temperature ranging from 660°C to 800°C), halogen heating tubes (having a highest heating temperature smaller than 1,000°C), carbon fiber heating tubes (having a highest heating temperature smaller than 1,000°C). However, the above heating tubes face problems such as insufficient heating speed in the heating temperature range, inadequate temperature, and tendency for high temperature fusing during temperature rise, which may prolong cooking time. Thus, the effect of crispy outside and tender inside of the food can hardly be reached during the heating, thereby resulting in unsatisfactory user experience.

### SUMMARY

The present disclosure aims to solve at least one of the technical problems in the related art to some extent. To this end, an objective of the present disclosure is to provide a heating film. The heating film has an advantage of self-limiting temperature, which can reduce occurrences of fusing caused by a high temperature during a continuous rise in heating temperature.

In an aspect, the present disclosure provides a heating film. According to embodiments of the present disclosure, the heating film has a critical temperature. When a temperature of the heating film is lower than the critical temperature, a resistance of the heating film decreases in response to an increase in the temperature of the heating film. When the temperature of the heating film is higher than the critical temperature, the resistance of the heating film increases in response to the increase in the temperature of the heating film. In this way, the heating film of the present disclosure has a characteristic of self-limiting temperature. In an embodiment of the present disclosure, at an initial stage of heating (i.e., when the temperature of the heating film is lower than the critical temperature), the resistance of the heating film decreases with the increase in the temperature of the heating film, and thus a current increases, in such a manner that the power of the heating film increases with the increase in the temperature of the heating film. Therefore, at the initial stage, the heating film can rapidly heat up. When the temperature of the heating film reaches the critical temperature, the resistance of the heating film increases with the increase in the temperature of the heating film, and thus the current decreases, in such a manner that the power of the heating film decreases with the increase in the temperature of the heating film. Therefore, at this stage, the temperature rise rate of the heating film begins to slow down. On the one hand, the characteristic of self-limiting temperature of the heating film enables the heating film to accelerate a temperature rise speed within a temperature zone below the critical temperature, allowing the heating film to reach the target temperature as soon as possible. On the other hand, when the heating temperature is higher than the critical temperature, the characteristic of self-limiting temperature of the heating film can reduce the possibility of occurrences of fusing during a continuous rise of the heating temperature.

According to an embodiment of the present disclosure, when the temperature of the heating film is lower than the critical temperature, a temperature rise rate of the heating film is a first temperature rise rate; and when the temperature of the heating film is higher than the critical temperature, the temperature rise rate of the heating film is a second temperature rise rate, the first temperature rise rate being greater than the second temperature rise rate.

According to an embodiment of the present disclosure, the critical temperature of the heating film has a value ranging from 50°C to 500°C.

According to an embodiment of the present disclosure, time for the heating film to reach a maximum heating temperature ranges from 0.5 s to 2 s.

According to an embodiment of the present disclosure, the maximum heating temperature of the heating film ranges from 500°C to 1,700°C.

According to an embodiment of the present disclosure, a material of the heating film is graphite.

According to an embodiment of the present disclosure, the heating film has a flake-like structure.

According to an embodiment of the present disclosure, the heating film satisfies at least one of the following conditions that: the heating film has a thickness ranging from 0.04 mm to 2 mm; and the heating film has a density ranging from 0.6 g/cm³ to 1.8 g/cm³.

According to an embodiment of the present disclosure, the heating film having a length of 1 decimeter has a weight ranging from 0.03 g to 0.1 g.

According to an embodiment of the present disclosure, the heating film has a thermal diffusion coefficient ranging from 50 m²/s to 450 m²/s.

According to an embodiment of the present disclosure, the heating film has power ranging from 15 W to 10,000 W.

According to an embodiment of the present disclosure, the heating film comprises a plurality of heating units sequentially arranged in a length direction, and adjacent heating units are arranged at an interval from each other and connected through a connection segment.

According to an embodiment of the present disclosure, each of the plurality of heating units has a hollowed-out hole.

In another aspect, the present disclosure provides a method for preparing the heating film described above. According to an embodiment of the present disclosure, a raw material for preparing the heating film comprises natural graphite or graphene nanoplatelets. In this way, the heating film prepared from the natural graphite or the graphene nanoplatelets has a characteristic of self-limiting temperature. In an embodiment of the present disclosure, at an initial stage of heating (i.e., when the temperature of the heating film is lower than the critical temperature), the resistance of the heating film decreases with the increase in the temperature of the heating film, and thus a current increases, in such a manner that the power of the heating film increases with the increase in the temperature of the heating film. Therefore, at the initial stage, the heating film can rapidly heat up. When the temperature of the heating film reaches the critical temperature, the resistance of the heating film increases with the increase in the temperature of the heating film, and thus the current decreases, in such a manner that the power of the heating film decreases with the increase in the temperature of the heating film. Therefore, at this stage, the heating rate of the heating film begins to slow down. On the one hand, the characteristic of self-limiting temperature of the heating film enables the heating film to accelerate a temperature rise speed within a temperature zone below the critical temperature, allowing the heating film to reach the target temperature as soon as possible. On the other hand, when the heating temperature is higher than the critical temperature, the characteristic of self-limiting temperature of the heating film can reduce the possibility of occurrences of fusing during a continuous rise of the heating temperature. In addition, when the heating film is prepared using the natural graphite or the graphene nanoplatelets, the manufacturing costs can be effectively reduced. The natural graphite, which exists in nature, does not need to be prepared, reducing process flows and costs for preparation. Also, the graphene nanoplatelets are derived from abundant sources, which is conducive to reducing the preparation costs of the heating film.

According to an embodiment of the present disclosure, the method for preparing the above-mentioned heating film comprises: providing the natural graphite, and treating the natural graphite to obtain expandable graphite; performing an expansion treatment on the expandable graphite to obtain expanded graphite; and performing calendering, first heat treatment, and cutting on the expanded graphite to obtain the heating film.

According to an embodiment of the present disclosure, the heating film has a critical temperature ranging from 50°C to 200°C.

According to an embodiment of the present disclosure, the method for preparing the above-mentioned heating film comprises: uniformly mixing and dispersing the graphene nanoplatelets and an additive to obtain a dispersion; obtaining a dispersion film by coating the dispersion; performing second heat treatment on the dispersion film to obtain a preliminary carbon-based film; and performing calendering and cutting on the preliminary carbon-based film to obtain the heating film.

According to an embodiment of the present disclosure, the heating film has a critical temperature ranging from 150°C to 500°C.

According to an embodiment of the present disclosure, the additive comprises at least one of carboxymethyl cellulose, polyvinyl alcohol, polyethylene glycol, polyacrylic acid, and waterborne polyurethane; and based on a total mass of the dispersion, a mass fraction of the additive is smaller than or equal to 5% by mass.

In yet another aspect, the present disclosure provides a heating tube. According to an embodiment of the present disclosure, the heating tube comprises the heating film described above. Therefore, the heating tube has a fast heating speed and a high heating temperature. Further, the heating tube has a characteristic of self-limiting temperature. On the one hand, the characteristic of self-limiting temperature of the heating tube enables the heating tube to accelerate a heating speed within a temperature zone below the critical temperature, allowing the heating tube to reach a target temperature as soon as possible. On the other hand, when the heating temperature is higher than the critical temperature, the characteristic of self-limiting temperature of the heating film can reduce the possibility of occurrences of fusing during a continuous rise of the heating temperature.

In still yet another aspect, the present disclosure provides a heating appliance. According to an embodiment of the present disclosure, the heating appliance comprises the heating tube described above. Therefore, the heating appliance has a fast heating speed and a high heating temperature. Further, the heating appliance has a characteristic of self-limiting temperature. On the one hand, the characteristic of self-limiting temperature of the heating film enables the heating film to accelerate a temperature rise speed within a temperature zone below the critical temperature, allowing the heating film to reach the target temperature as soon as possible. On the other hand, when the heating temperature is higher than the critical temperature, the characteristic of self-limiting temperature of the heating film can reduce the possibility of occurrences of fusing during a continuous rise of the heating temperature.

According to an embodiment of the present disclosure, the heating appliance is an electric oven, a microwave oven, a combi steam oven, an electric kettle, an electric blanket, an electric warm air blower, an electric heater, a bath heater, an electric ceramic cooktop, or a disinfection cabinet.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a schematic diagram of heat radiation of a heating film of the present disclosure.
FIG. 2 is a schematic diagram of heat radiation of a heating tube in the related art.
FIG. 3 is a schematic structural diagram of a heating film according to an embodiment of the present disclosure.
FIG. 4 is a schematic structural diagram of a heating film according to some other embodiments of the present disclosure.
FIG. 5 is a schematic structural diagram of a heating film according to some other embodiments of the present disclosure.
FIG. 6 is a schematic structural diagram of a heating tube according to some embodiments of the present disclosure.
FIG. 7 is a schematic structural diagram of a heating tube according to some embodiments of the present disclosure.
FIG. 8 is a schematic structural diagram of a heating tube according to some embodiments of the present disclosure.
FIG. 9 is a schematic structural diagram of a heating film according to some other embodiments of the present disclosure.
FIG. 10 is a schematic graph illustrating a variation trend of a resistance with temperature of a heating film in Example 1 of the present disclosure.

### DETAILED DESCRIPTION

Solutions of the present disclosure will be explained below with reference to examples. It should be understood by those skilled in the art that the examples described below are intended to explain the present disclosure, but should not be construed as limiting the scope of the present disclosure. Where specific techniques or conditions are not indicated in the examples, the procedures shall be carried out in accordance with the techniques or conditions described in the literature in the field or in accordance with the product specification. The reagents or instruments used without the indication of the manufacturers are all conventional products that can be purchased commercially.

The present disclosure is described below with reference to specific examples. It should be noted that these examples are merely descriptive and do not limit the present disclosure in any way.

In an aspect, the present disclosure provides a heating film. According to embodiments of the present disclosure, the heating film has a critical temperature. When a temperature of the heating film is lower than the critical temperature, a resistance of the heating film decreases with an increase in the temperature of the heating film. When the temperature of the heating film is higher than the critical temperature, the resistance of the heating film increases with the increase in the temperature of the heating film. In this way, the heating film of the present disclosure has a characteristic of self-limiting temperature. In an embodiment of the present disclosure, at an initial stage of heating (i.e., when the temperature of the heating film is lower than the critical temperature), the resistance of the heating film decreases with the increase in the temperature of the heating film, and thus a current increases, in such a manner that the power of the heating film increases with the increase in the temperature of the heating film. Therefore, at the initial stage, the heating film can rapidly heat up. When the temperature of the heating film reaches the critical temperature, the resistance of the heating film increases with the increase in the temperature of the heating film, and thus the current decreases, in such a manner that the power of the heating film decreases with the increase in the temperature of the heating film. Therefore, at this stage, the temperature rise rate of the heating film begins to slow down, allowing the heating film slowly and gradually reach the maximum heating temperature. On the one hand, the characteristic of self-limiting temperature of the heating film enables the heating film to accelerate a temperature rise speed within a temperature zone below the critical temperature, allowing the heating film to reach the target temperature as soon as possible. On the other hand, when the heating temperature is higher than the critical temperature, the characteristic of self-limiting temperature of the heating film can reduce the possibility of occurrences of fusing during a continuous rise of the heating temperature, for example, thereby improving reliability and stability of the heating film.

According to some embodiments of the present disclosure, when the temperature of the heating film is lower than the critical temperature, a temperature rise rate of the heating film is a first temperature rise rate; and when the temperature of the heating film is higher than the critical temperature, the temperature rise rate of the heating film is a second temperature rise rate. The first temperature rise rate is greater than the second temperature rise rate. Therefore, the heating film of the present disclosure can reach the critical temperature within a relatively short time with the first temperature rise rate, which is relatively high and can accelerate the heating speed of the heating film. Thereafter, the temperature of the heating film can be further increased with the second temperature rise rate that is relatively low, avoiding the problem of fusing during the continuous rise of the heating temperature. In this way, for example, reliability and stability of the heating film can be improved.

According to some embodiments of the present disclosure, the critical temperature of the heating film ranges from 50°C to 500°C. For example, the critical temperature of the heating film may be 50°C, 80°C, 100°C, 120°C, 150°C, 180°C, 200°C, 230°C, 250°C, 280°C, 300°C, 330°C, 350°C, 370°C, 400°C, 420°C, 450°C, 480°C, 500°C, or the like. Therefore, for the heating film of the present disclosure, a specific value of the critical temperature of the heating film is adjustable within a wide range. When the heating film has a relatively high heating temperature, a greater value of the critical temperature can be chosen. When the heating film has a relatively low heating temperature, a smaller value of the critical temperature can be chosen. In this way, the problem of fusing can be avoided while ensuring the high temperature rise speed of the heating film.

In some embodiments, the value of the critical temperature may vary for different heating films. The specific value of the critical temperature may be adjusted by adjusting factors such as crystallinity, density, thickness, or carbon content of a material of the heating film. In some embodiments, the heating film has a relatively lower critical temperature, when the crystallinity of the heating film is relatively higher. In other embodiments, the heating film has a relatively lower critical temperature, when the density of the heating film is relatively higher. In yet other embodiments, the heating film has a relatively lower critical temperature, when the thickness of the heating film is relatively greater. In still yet other embodiments, the heating film has a relatively lower critical temperature, when the carbon content of the heating film is relatively higher. Therefore, in the present disclosure, the value of the critical temperature of the heating film can be adjusted by flexibly adjusting factors such as the density, crystallinity, or carbon content of the heating film.

According to some embodiments of the present disclosure, time for the heating film to reach a maximum heating temperature ranges from 0.5 s to 2 s, e.g., 0.5 s, 0.6 s, 0.7 s, 0.8 s, 0.9 s, 1 s, 1.1 s, 1.2 s, 1.3 s, 1.4 s, 1.5 s, 1.6 s, 1.7 s, 1.8 s, 1.9 s, or 2.0 s. Therefore, the heating film of the present disclosure has a relatively high heating speed, and thus the maximum heating temperature can be reached within a relatively short time. Therefore, the heating efficiency of the heating film can be greatly increased.

According to some embodiments of the present disclosure, the maximum heating temperature of the heating film ranges from 500°C to 1,700°C. For example, the maximum heating temperature of the heating film may be 500°C, 550°C, 600°C, 700°C, 800°C, 900°C, 1,000°C, 1,100°C, 1,200°C, 1,300°C, 1,400°C, 1,500°C, 1,600°C, 1,700°C, or the like. Therefore, the heating film of the present disclosure has the relatively high maximum heating temperature, even up to 1,700°C. In this way, for satisfying more application heating requirements of the heating film, various heating films having different power can be obtained. For example, an ultra-low power heating film or an ultra-high power heating film can be obtained.

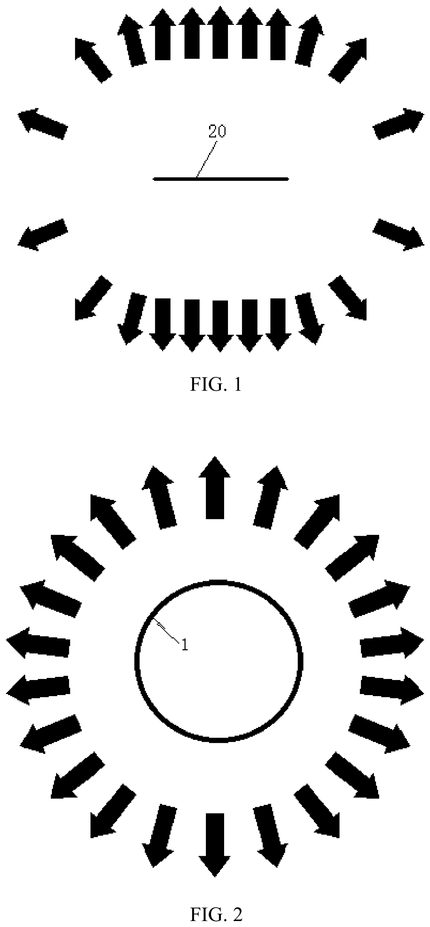

According to some embodiments of the present disclosure, a material of a heating film 10 is graphite. Therefore, the graphite is used as the material of a carbon-based heating film. As illustrated in FIG. 1, the graphite has a flake-like structure, and the heating film 10 also has a flake-like structure. An extension plane of the flake-like heating film 10 is substantially consistent with an extension plane of the flake-like graphite. When the heating film generates heat, the heat is mainly radiated out in a vertical direction of a heat generation surface, which provides strong directivity and relatively concentrated radiation heat. Therefore, a heating efficiency can be better improved. In addition, when the above conditions are satisfied, the heating film of graphite has a fast heating speed, a high heating temperature, and a high temperature rise rate. In the related art, as illustrated in FIG. 2, heat radiation from a heating tube 20 (such as a metallic heating tube or a quartz tube) is uniformly emitted in all directions, instead of emitting centrally that usually results in a waste of heat and reduces a heating efficiency.

According to some embodiments of the present disclosure, the heating film having a length of 1 decimeter has a weight ranging from 0.03 g to 0.1 g, e.g., 0.03 g, 0.04 g, 0.05 g, 0.06 g, 0.07 g, 0.08 g, 0.09 g, and 0.1 g. Since the material of the heating film of the present disclosure is graphite, which has relatively light weight, the heating film can have a relatively light weight, which is far less than a weight of the heating tube such as the metallic heating tube or the quartz tube. As a result, a lightweight design of the heating film of the present disclosure is facilitated, which in turn further contributes to obtaining the heating tube having the light weight.

According to some embodiments of the present disclosure, the heating film has a carbon content greater than or equal to 85%. Therefore, the heating film has a high carbon content, i.e., high purity, which is conducive to obtaining the heating film with satisfactory performance. Moreover, in the present disclosure, the value of the critical temperature of the heating film can also be adjusted by adjusting the carbon content to meet a variety of different adaptation needs.

According to some embodiments of the present disclosure, the heating film satisfies at least one of the following conditions that: the heating film has a thickness ranging from 0.04 mm to 2 mm, e.g., 0.04 mm, 0.06 mm, 0.08 mm, 0.1 mm, 0.2 mm, 0.5 mm, 0.8 mm, 1.0 mm, 1.2 mm, 1.5 mm, 1.8 mm, or 2.0 mm; and the heating film has a density ranging from 0.6 g/cm³ to 1.8 g/cm³, e.g., 0.6 g/cm³, 0.8 g/cm³, 1.0 g/cm³, 1.2 g/cm³, 1.4 g/cm³, 1.5 g/cm³, 1.6 g/cm³, or 1.8 g/cm³. The heating film having the above density and thickness can meet requirements of different power for the heating film. Moreover, the carbon-based heating film of the present disclosure has high manufacturability, i.e., high production yield. Also, the carbon-based heating film of the present disclosure has a long service life. In some specific embodiments of the present disclosure, the carbon-based heating film has the following resistance characteristics (isodensity): the resistance gradually decreases with the increase in the thickness. With an increase in the thickness, the resistance becomes infinitely closer to 0. With a decrease in the thickness, the resistance becomes greater. Based on this, in the present disclosure, under the above-mentioned density conditions and thickness conditions, the heating films having different power can be obtained.

According to some embodiments of the present disclosure, the heating film has power ranging from 15 W to 10,000 W, e.g., 15 W, 20 W, 40 W, 50 W, 70 W, 100 W, 150 W, 300 W, 500 W, 800 W, 1,000 W, 1,500 W, 3,000 W, 4,500 W, 5,000 W, 6,000 W, 7,000 W, 8,000 W, 9,000 W, or 10,000 W. Therefore, with the present disclosure, it can be effectively achieved that the heating film has a power across a wide range. That is, the heating film can have ultra-low or ultra-high power, which meet power use requirements of the heating film under various application conditions.

According to some embodiments of the present disclosure, a thermal diffusion coefficient of the heating film ranges from 50 m²/s to 450m²/s, e.g., 50 m²/s, 80 m²/s, 100 m²/s, 130 m²/s, 150 m²/s, 280 m²/s, 300 m²/s, 320 m²/s, 350 m²/s, 370 m²/s, and 400 m²/s. The above thermal diffusion coefficient can cause the heat of the heating film to be transferred to a heating cavity with a relatively suitable rate, in such a manner that the heat generated by the heating film is mainly concentrated on the to-be-heated object. In this way, a satisfactory heating rate can be ensured, and the heat is prevented from being transferred out quickly to avoid a large heat loss. In addition, the above thermal diffusion coefficient is also conducive to prolonging the service life of the heating film and improving the manufacturability of the heating film.

In the embodiments of the present disclosure, the specific cut type of the heating film can be diversified. Those skilled in the art can flexibly design the cut type of the heating film based on requirements of actual situations such as the resistance and power of the heating film. Some cut types of the heating film will be described below in accordance with some specific embodiments of the present disclosure.

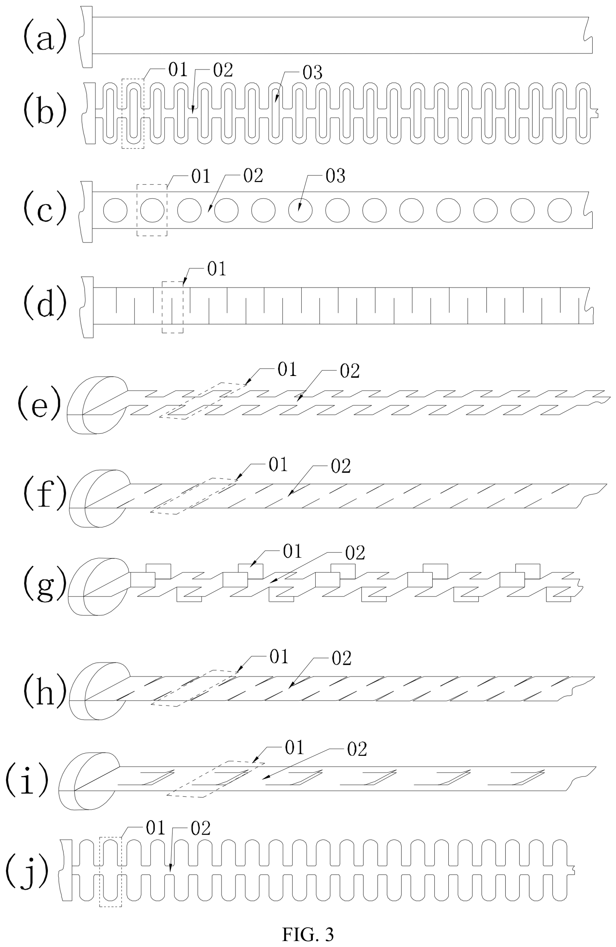

According to some embodiments of the present disclosure, as illustrated in FIG. 3, the heating film comprises a plurality of heating units 01 sequentially arranged in a length direction. Adjacent heating units 01 are spaced apart from each other and connected through a connection segment 02. Therefore, the heating film of the present disclosure can be cut into various structures with different cut types to meet different usage requirements. In some embodiments of the present disclosure, as illustrated in FIG. 3, the heating unit has an outer peripheral wall formed in an oblong shape or a polygonal shape.

In some embodiments of the present disclosure, as illustrated in FIG. 3(b), FIG. 3(c), and FIG. 3(i), each heating unit 01 has a hollowed-out hole 03. Therefore, the hollowed-out hole can accelerate a heat dissipation rate of the heating film and a heating rate of the to-be-heated object.

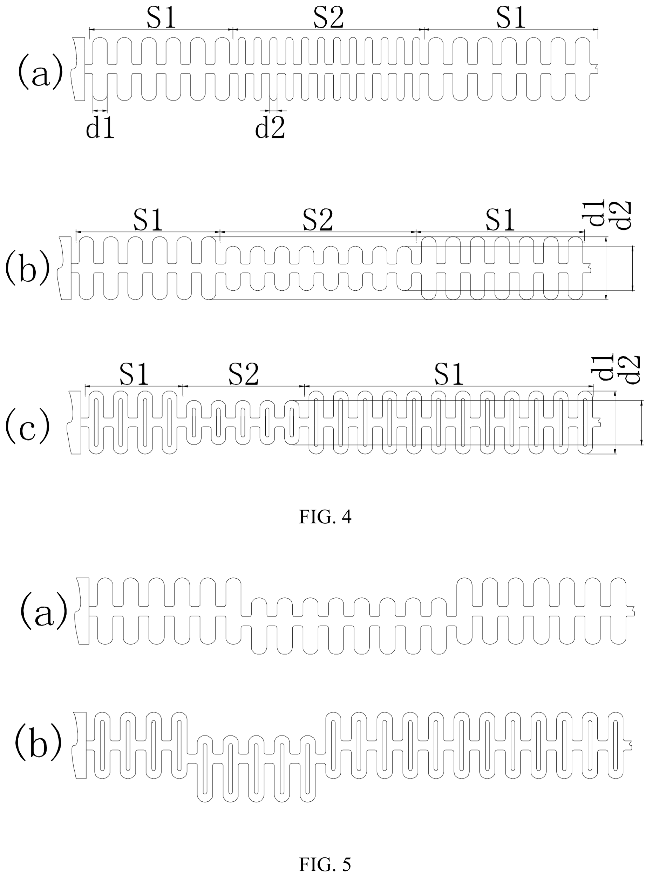

In some embodiments of the present disclosure, as illustrated in FIG. 4, the heating film comprises a first heating segment S1 and a second heating segment S2 that are adjacent to each other in the length direction. The first heating segment S1 comprises multiple heating units 01 connected to each other. The second heating segment S2 comprises multiple heating units 10 adjacent to each other. Each of the multiple heating units 01 corresponding to the first heating segment S1 has a smaller size than each of the multiple heating units 10 corresponding to the second heating segment S2. For example, as illustrated in FIG. 4(a), the heating unit 01 corresponding to the first heating segment S1 has the same length as the heating unit 10 corresponding to the second heating segment S2, but a width d1 of the heating unit 01 corresponding to the first heating segment S1 and a width d2 of the heating unit 10 corresponding to the second heating segment S2 are different. For example, as illustrated in FIG. 4(b) and FIG. 4(c), the heating unit 01 corresponding to the first heating segment S1 has the same width as the heating unit 10 corresponding to the second heating segment S2, but a length d1 of the heating unit 01 corresponding to the first heating segment S1 and a length d2 of the heating unit 10 corresponding to the second heating segment S2 are different. Therefore, diversification of a structure of the heating film can be realized.

In some embodiments of the present disclosure, as illustrated in FIG. 5, the first heating segment S1 and the second heating segment S2 are offset from each other in a width direction of the heating film. Therefore, the structure of the heating film can be diversified.

In some embodiments of the present disclosure, as illustrated in FIG. 3(d), FIG. 3(e), FIG. 3(f), FIG. 3(h), FIG. 3(i), and FIG. 3(j), the heating film has a plurality of notches arranged at intervals in the length direction. Therefore, the structure of the heating film can be diversified. Further, in some embodiments of the present disclosure, as illustrated in FIG. 3(i), each notch is defined through separating a part of the heating film from the remaining part of the heating film and then bending the part of the heating film.

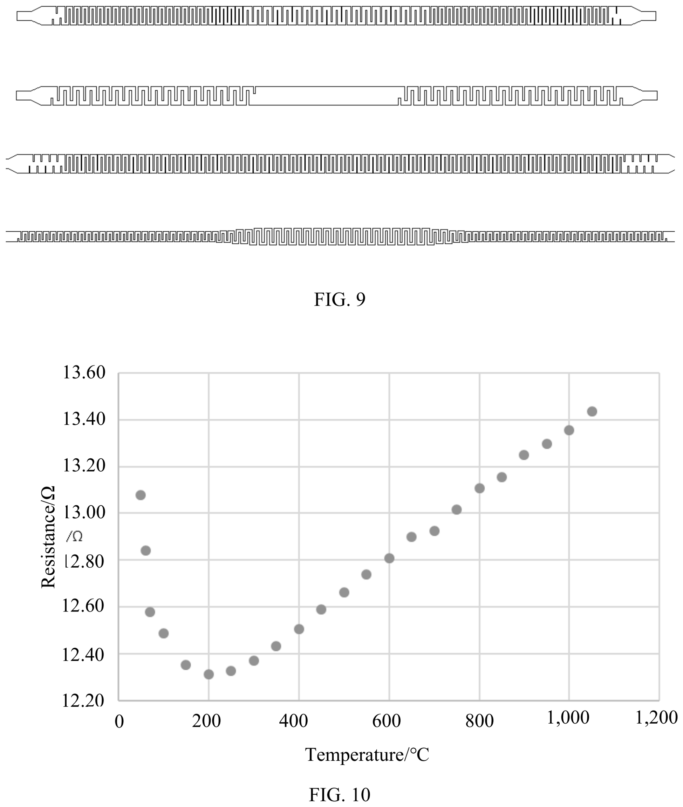

In some embodiments, as illustrated in FIG. 9, one heating film may have different cut types, or one heating film may comprise one cut type distributed with an uneven density.

In another aspect, the present disclosure provides a method for preparing the heating film described above. According to an embodiment of the present disclosure, a raw material for preparing the heating film comprises natural graphite or graphene nanoplatelets. Therefore, the heating film prepared from the natural graphite or the graphene nanoplatelets has a characteristic of self-limiting temperature. In an embodiment of the present disclosure, at an initial stage of heating (i.e., when the temperature of the heating film is lower than the critical temperature), the resistance of the heating film decreases with the increase in the temperature of the heating film, and thus a current increases, in such a manner that the power of the heating film increases with the increase in the temperature of the heating film. Therefore, at the initial stage, the heating film can rapidly heat up. When the temperature of the heating film reaches the critical temperature, the resistance of the heating film increases with the increase in the temperature of the heating film, and thus the current decreases, in such a manner that the power of the heating film decreases with the increase in the temperature of the heating film. Therefore, at this stage, the heating rate of the heating film begins to slow down. On the one hand, the characteristic of self-limiting temperature of the heating film enables the heating film to accelerate a temperature rise speed within a temperature zone below the critical temperature, allowing the heating film to reach the target temperature as soon as possible. On the other hand, when the heating temperature is higher than the critical temperature, the characteristic of self-limiting temperature of the heating film can reduce the possibility of occurrences of fusing during a continuous rise of the heating temperature. In addition, the heating film prepared using the natural graphite or the graphene nanoplatelets can effectively reduce manufacturing costs. The natural graphite, which exists in nature, does not need to be prepared, reducing process flows and costs for preparation. Also, the graphene nanoplatelets are available from abundant sources, which is conducive to reducing the preparation costs of the heating film.

A method for preparing the heating film is described in detail below based on different raw materials for preparing the heating film.

According to some embodiments of the present disclosure, the method for preparing the heating film described above comprises the following steps.

In S110, natural graphite is provided and treated to obtain expandable graphite.

In the present disclosure, the natural graphite is adopted. The natural graphite takes a great proportion among earth minerals. Further, a material for preparing the carbon-based film requires no high-temperature graphitization in a preparation process, is obtainable without other processes of preparation, and can be manufactured in a continuous manner, which reduce costs. On the whole, the material for preparing the carbon-based film has advantages such as a wide range of raw material sources, simple preparation process, satisfactory product stability, and ease of on-demand adjustment of performance parameters, which confer significant benefits in reducing product costs, enhancing product reliability, diversifying product lines, and the like. If artificial graphite is used, a process flow of manufacturing the artificial graphite needs to be set up, which greatly increases manufacturing costs and manufacturing time of the heating film and reduces a manufacturing efficiency. In addition, by using natural flake graphite having a single-layer form, the graphite in the prepared heating film is also of a layered structure, improving the relatively concentrated heating effect of the heating film.

In S120, an expansion treatment is performed on the expandable graphite to obtain expanded graphite.

In some embodiments, the expandable graphite, after entering an expansion furnace, is subjected to an instant high temperature and rapidly expands to form graphite worm, i.e., the expanded graphite. Through the expansion treatment, an expansion ratio of the expandable graphite may range from 30 times to 400 times. During the expansion treatment, an expansion temperature ranges from 850°C to 1,200°C, and an expansion duration ranges from 0.7 s to 1.3 s.

In S130, calendering, first heat treatment, and cutting are performed on the expanded graphite to obtain the heating film. The heating film of a predetermined cut type is obtained through the cutting. The specific cut type can refer to FIG. 3, FIG. 4 and FIG. 5. Characteristics of specific cutting forms are consistent with the requirements mentioned above, which are thereof not described in detail herein.

In some embodiments, the above heating film prepared through the natural graphite has the critical temperature ranging from 50°C to 200°C. Therefore, the heating film having a relatively low critical temperature can be prepared through the above method.

According to some other embodiments of the present disclosure, the method for preparing the heating film described above comprises the following steps.

In S210, the graphene nanoplatelets and an additive are uniformly mixed and dispersed to obtain a dispersion.

In some embodiments, the graphene nanoplatelets have a planar dimension ranging from 1 µm to 100 µm and a specific surface area ranging from 30 m²/g to 800 m²/g. The graphene nanoplatelets satisfying the above requirements is conducive to uniform dispersion.

In some embodiments, the additive comprises at least one of carboxymethyl cellulose, polyvinyl alcohol, polyethylene glycol, polyacrylic acid, and waterborne polyurethane. By adding the above additive, a film-forming ability of the graphene nanoplatelets can be effectively improved.

Further, based on a total mass of the dispersion, a mass fraction of the additive is smaller than or equal to 5% by mass, for example, 1%, 1.5%, 2%, 2.5%, 3%, 3.5%, 4%, 4.5%, or 5%, by mass. A dosage of the additive is low, which will not affect satisfactory performance of the heating film.

In S220, a dispersion film is obtained by coating the dispersion.

In some embodiments, the coating method is not specifically limited. Those skilled in the art can flexibly select an appropriate coating method as desired, such as spin coating, spray coating, and the like.

In S230, second heat treatment is performed on the dispersion film to obtain a preliminary carbon-based film.

In this step, the graphene is deoxygenated through the second heat treatment to obtain a graphite material. The second heat treatment may be carried out in a vacuum atmosphere or an inert atmosphere at a temperature ranging from 1,500°C to 3,000°C. Graphite with a high carbon content can be obtained through the above method. For example, the carbon content can be more than 99%.

In S240, calendering and cutting are performed on the preliminary carbon-based film to obtain the heating film. The heating film of a predetermined cut type is obtained through the cutting. The specific cut type can refer to FIG. 3, FIG. 4 and FIG. 5. Characteristics of the specific cut type are consistent with the requirements described above, which are not described in detail herein.

In some embodiments, the heating film prepared through the graphene nanoplatelets has the critical temperature ranging from 150°C to 500°C. Therefore, the heating film having a relatively high critical temperature can be prepared through the above method.

According to an embodiment of the present disclosure, the above two processes for preparing the heating film are simple and the formulation is adjustable to obtain the heating films with different values of the critical temperature. Therefore, the heating film can satisfy various heating temperature requirements.

In yet another aspect, the present disclosure provides a heating tube. According to an embodiment of the present disclosure, the heating tube comprises the heating film described above. Therefore, the heating tube has a fast heating speed and a high heating temperature. Further, the heating tube has a characteristic of self-limiting temperature. On the one hand, the characteristic of self-limiting temperature of the heating film enables the heating film to accelerate a temperature rise speed within a temperature zone below the critical temperature, allowing the heating film to reach the target temperature as soon as possible. On the other hand, when the heating temperature is higher than the critical temperature, the characteristic of self-limiting temperature of the heating film can reduce the possibility of occurrences of fusing during a continuous rise of the heating temperature. Those skilled in the art can understand that the heating tube has all the features and advantages of the heating film described above, which are not described in detail herein.

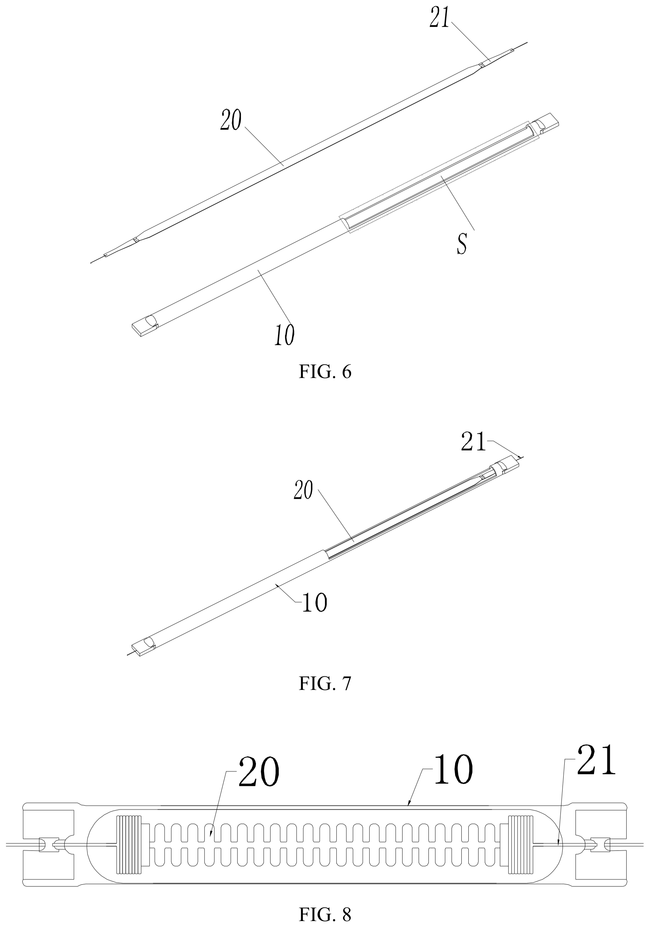

In some embodiments, as illustrated in FIG. 6, FIG. 7, and FIG. 8, the heating tube further comprises a sleeve 10. Region S in FIG. 6 refers to a partial cross-sectional view of a sleeve. The heating film 20 is disposed in the sleeve 10, and has terminals 21 arranged at two ends of the heating film 20. The sleeve may be a quartz glass tube or the like.

In still yet another aspect, the present disclosure provides a heating appliance. According to an embodiment of the present disclosure, the heating appliance comprises the heating tube described above. Therefore, the heating appliance has a fast heating speed and a high heating temperature. Further, the heating appliance has a characteristic of self-limiting temperature. On the one hand, the characteristic of self-limiting temperature of the heating film enables the heating film to accelerate a temperature rise speed within a temperature zone below the critical temperature, allowing the heating film to reach the target temperature as soon as possible. On the other hand, when the heating temperature is higher than the critical temperature, the characteristic of self-limiting temperature of the heating film can reduce the possibility of occurrences of fusing during a continuous rise of the heating temperature.

According to an embodiment of the present disclosure, the heating appliance is an electric oven, a microwave oven, a combi steam oven, an electric kettle, an electric blanket, an electric warm air blower, an electric heater, a bath heater, an electric ceramic cooktop, or a disinfection cabinet.

Those skilled in the art can understand that, in addition to the above-mentioned heating tube, the heating appliance further comprises structures or components necessary for the heating appliance. As an example, in addition to the above-mentioned heating tube, the electric oven further comprises a housing, a heating space, a base, a plug, and other necessary structures or components.

### EXAMPLES

### Example 1

The heating film was prepared using natural graphite. A schematic structural diagram of the heating film can refer to FIG. 3(a). The heating film had a density of 1.5 g/cm³, a thickness of 1 mm, a length of 300 mm, and a width of 8 mm. Under a voltage of 50V, a temperature, a current, resistance, power, a maximum heating temperature, and time required to reach the maximum heating temperature of the heating film were tested. Test results are shown in Table 1. A graph of variation trend of a resistance with temperature of the heating film can refer to FIG. 10. FIG. 10 and Table 1 both reveal that the heating film had a value of the critical temperature of 200°C.

**[Table 1]**

| Temperature/°C | 100 | 150 | 200 | 400 | 800 |
|---|---|---|---|---|---|
| Current/A | 3.840 | 4.049 | 4.062 | 3.997 | 3.814 |
| Resistance/Ω | 13.02 | 12.35 | 12.31 | 12.51 | 13.11 |
| Power/W | 192.012 | 202.429 | 203.087 | 199.840 | 190.694 |
| Maximum heating temperature/°C | 1,100 | | | | |
| Time/s | 0.35 | | | | |

### Example 2

Example 2 differed from Example 1 in the following aspects: the heating film was prepared using natural graphite, a schematic structural diagram of the heating film can refer to FIG. 3(c); and the heating film had a thickness of 0.7 mm, a length of 270 mm, and a width of 10 mm. The critical temperature, maximum heating temperature, and time required to reach the maximum heating temperature of the heating film with different densities were tested under a voltage of 50V. Test results are shown in Table 2. Table 2 reveals that the value of the critical temperature of the heating film gradually decreased with an increase in the density of the heating film.

**[Table 2]**

| | | | | |
|---|---|---|---|---|
| Density/g/cm³ | 0.6 | 0.8 | 1.1 | 1.5 |
| Power/W | 91.03 | 150. 24 | 180.43 | 201.84 |
| Resistance/Ω | 27.46 | 16.64 | 13.86 | 12.39 |
| Critical temperature/°C | 199 | 189 | 181 | 179 |

### Example 3

The heating film was prepared using graphene. A schematic structural diagram of the heating film can refer to FIG. 3(c). The heating film had a thickness of 0.2 mm, a length of 350 mm, and a width of 9.5 mm. The critical temperature, maximum heating temperature, and time required to reach the maximum heating temperature of the heating film with different carbon contents were tested under a voltage of 65V. Test results are shown in Table 3. Table 3 reveals that the value of the critical temperature of the heating film gradually decreased with an increase in the carbon content of the heating film.

**[Table 3]**

| | | | | |
|---|---|---|---|---|
| Carbon content/% | 85 | 93 | 97 | 99 |
| Power/W | 230.9 | 300.7 | 340.1 | 350.2 |
| Resistance/Ω | 18.30 | 14.05 | 12.42 | 12.06 |
| Critical temperature/°C | 486 | 341 | 288 | 253 |

### Example 4

Example 4 differed from Example 1 in the following aspects: the heating film was prepared using natural graphite, a schematic structural diagram of the heating film can refer to FIG. 3(c); and the heating film had a density of 1.3 g/cm³, a length of 420 mm, and a width of 10 mm. The critical temperature, maximum heating temperature, and time required to reach the maximum heating temperature of the heating film were tested under a voltage of 100V. Test results are shown in Table 4. Table 4 reveals that the value of the critical temperature of the heating film gradually decreased with an increase in the thickness of the heating film.

**[Table 4]**

| | | | | | |
|---|---|---|---|---|---|
| Thickness/mm | 0.08 | 0.15 | 0.3 | 0.7 | 1.0 |
| Power/W | 209.5 | 310.4 | 420.5 | 551.4 | 632.3 |
| Resistance/Ω | 47.7 | 32.32 | 23.78 | 15.14 | 15.81 |
| Critical temperature/°C | 195 | 162 | 139 | 121 | 115 |

### Example 5

The heating film (with a cut type as illustrated in FIG. 3(a)) of the present disclosure having a thickness of 1.0 mm and a density of 1.2 g/cm³ was prepared as a heating tube. The heating tube in Example 1, a halogen tube, a quartz tube, and a metallic tube were respectively applied in the same oven (having a volume of 10 L). All of the above-mentioned tubes were tested at power of 600 W. Time required for each of the above tubes to reach 200°C was tested. Test results are shown in Table 5. The data reveal that the heating rate of the heating tube in Example 1 was increased by 48.6% compared with that of the quartz tube, by 46.6% compared with that of the metallic tube, and by 31.7% compared with that of the halogen tube.

**[Table 5]**

| Heating tube | Heating tube in Example 1 | Halogen tube | Quartz tube | Metallic tube |
|---|---|---|---|---|
| Heating temperature/°C | 279 | 235 | 204 | 209 |
| Time/s | 149 | 218 | 290 | 279 |

### Comparative example 1

The maximum heating temperature and time to reach the maximum heating temperature of each of the quartz tube and the metallic tube were tested. Test results are shown in Table 6.

**[Table 6]**

| | Quartz tube | Metallic tube |
|---|---|---|
| Maximum heating temperature/°C | 800 | 750 |
| Time/s | 60 | 70 |

The above examples and the comparative example reveal that the heating film in Example 1 of the present disclosure had a high heating temperature and a rapid heating rate. Also, none of the heating films in the above examples encountered an undesirable issue of fusing during the temperature rise process.

The terms "first" and "second" are only used for descriptive purposes, and cannot be understood as indicating or implying relative importance or implicitly indicating the number of indicated technical features. Therefore, the features associated with "first" and "second" may explicitly or implicitly comprise at least one of the features. In the description of the present disclosure, "plurality" means at least two, unless otherwise specifically defined.

Reference throughout this specification to terms such as "an embodiment", "some embodiments", "an example", "a specific example", or "some examples" means that a particular feature, structure, material, or characteristic described in connection with the embodiment or example is comprised in at least one embodiment or example of the present disclosure. The appearances of the above phrases in various places throughout this specification are not necessarily referring to the same embodiment or example. Further, the particular features, structures, materials, or characteristics may be combined in any suitable manner in one or more embodiments or examples. In addition, different embodiments or examples and features of different embodiments or examples described in the specification may be combined by those skilled in the art without mutual contradiction.

Although the embodiments of the present disclosure have been illustrated and described above, it should be understood that the above-mentioned embodiments are exemplary and should not be construed as limiting the present disclosure. Those skilled in the art can make changes, modifications, substitutions, and alternations to the above-mentioned embodiments within the scope of the present disclosure.

## Claims

1. A heating film, having a critical temperature, wherein:
when a temperature of the heating film is lower than the critical temperature, a resistance of the heating film decreases in response to an increase in the temperature of the heating film; and
when the temperature of the heating film is higher than the critical temperature, the resistance of the heating film increases in response to the increase in the temperature of the heating film.

2. The heating film according to claim 1, wherein:
when the temperature of the heating film is lower than the critical temperature, a temperature rise rate of the heating film is a first temperature rise rate; and
when the temperature of the heating film is higher than the critical temperature, the temperature rise rate of the heating film is a second temperature rise rate, the first temperature rise rate being greater than the second temperature rise rate.

3. The heating film according to claim 1 or 2, wherein the critical temperature of the heating film has a value ranging from 50°C to 500°C.

4. The heating film according to any one of claims 1 to 3, wherein time for the heating film to reach a maximum heating temperature ranges from 0.5 s to 2 s.

5. The heating film according to claim 4, wherein the maximum heating temperature of the heating film ranges from 500°C to 1,700°C.

6. The heating film according to any one of claims 1 to 5, wherein a material of the heating film is graphite.

7. The heating film according to any one of claims 1 to 6, having a flake-like structure.

8. The heating film according to any one of claims 1 to 7, satisfying at least one of the following conditions that:
the heating film has a thickness ranging from 0.04 mm to 2 mm; and
the heating film has a density ranging from 0.6 g/cm³ to 1.8 g/cm³.

9. The heating film according to any one of claims 1 to 8, wherein the heating film having a length of 1 decimeter has a weight ranging from 0.03 g to 0.1 g.

10. The heating film according to any one of claims 1 to 9, having a thermal diffusion coefficient ranging from 50 m²/s to 450 m²/s.

11. The heating film according to any one of claims 1 to 10, having a power ranging from 15 W to 10,000 W.

12. The heating film according to any one of claims 1 to 11, comprising a plurality of heating units sequentially arranged in a length direction, wherein adjacent heating units are arranged at an interval from each other and connected through a connection segment.

13. The heating film according to claim 12, wherein each of the plurality of heating units has a hollowed-out hole.

14. A method for preparing a heating film according to any one of claims 1 to 13, wherein a raw material for preparing the heating film comprises natural graphite or graphene nanoplatelets.

15. The method according to claim 14, comprising:
providing the natural graphite, and treating the natural graphite to obtain expandable graphite;
performing an expansion treatment on the expandable graphite to obtain expanded graphite; and
performing calendering, a first heat treatment, and cutting on the expanded graphite to obtain the heating film.

16. The method according to claim 14 or 15, wherein the heating film has a critical temperature ranging from 50°C to 200°C.

17. The method according to any one of claims 14 to 16, comprising:
uniformly mixing and dispersing the graphene nanoplatelets and an additive to obtain a dispersion;
obtaining a dispersion film by coating the dispersion;
performing a second heat treatment on the dispersion film to obtain a preliminary carbon-based film; and
performing calendering and cutting on the preliminary carbon-based film to obtain the heating film.

18. The method according to any one of claims 14 to 17, wherein the heating film has a critical temperature ranging from 150°C to 500°C.

19. The method according to claim 17 or 18, wherein:
the additive comprises at least one of carboxymethyl cellulose, polyvinyl alcohol, polyethylene glycol, polyacrylic acid, and waterborne polyurethane; and
based on a total mass of the dispersion, a mass fraction of the additive is smaller than or equal to 5% by mass.

20. A heating tube, comprising a heating film according to any one of claims 1 to 13.

21. A heating appliance, comprising a heating tube according to claim 20.

22. The heating appliance according to claim 21, wherein the heating appliance is an electric oven, a microwave oven, a combi steam oven, an electric kettle, an electric blanket, an electric warm air blower, an electric heater, a bath heater, an electric ceramic cooktop, or a disinfection cabinet.
